# FASCICULE DE BREVET EUROPEEN

(11) **EP 3 182 566 B1**
(45) Date de publication et mention de la délivrance du brevet: **27.05.2020**
(21) Numéro de dépôt: 16200761.1
(22) Date de dépôt: 25.11.2016
(51) Int. Cl.: H02K 13/10, H02K 11/026, H02K 5/14

(54) **ENSEMBLE PORTE-BALAI POUR MOTEUR ÉLECTRIQUE**
SCHEIBENWISCHEREINHEIT FÜR ELEKTROMOTOR
BRUSH HOLDER ASSEMBLY FOR AN ELECTRIC MOTOR

(30) Priorité: 17.12.2015 FR 1562685
(43) Date de publication de la demande: 21.06.2017
(73) Titulaire: Valeo Systèmes d'Essuyage, 78322 Le Mesnil Saint Denis (FR)
(72) Inventeur: Servin, Alain, 86190 Villiers (FR); Faucher, Christophe, 86100 Châtellerault (FR)
(74) Mandataire: Valeo Systèmes d'Essuyage

(56) Documents cités:
- EP-A1- 0 612 137
- DE-A1- 19 623 258
- DE-A1-102007 005 572
- DE-A1-102009 027 366
- DE-U1- 9 316 543
- FR-A1- 2 520 153

## Description

La présente invention concerne le domaine des équipements de véhicule automobile comprenant un moteur électrique et plus précisément les ensembles porte-balais de ces équipements par exemple les moteurs d'essuie-glaces.

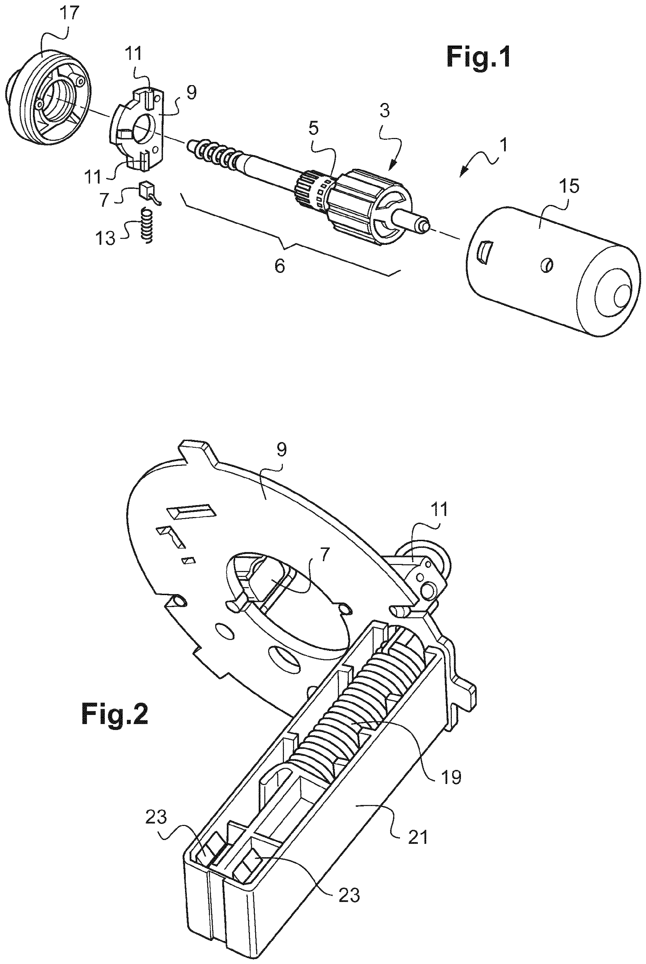

La figure 1 représente un schéma d'un moteur électrique 1 selon l'état de la technique. Le moteur électrique 1 comprend un rotor 6 sur lequel est disposé un induit 3 muni d'un collecteur 5 cylindrique sur lequel viennent frotter des balais de connexion 7 pour permettre l'alimentation de l'induit 3. De plus, le moteur électrique 1 comprend une plaquette 9 munie de porte-balais 11 destinés à recevoir les balais de connexion 7 et des ressorts 13 pour assurer le contact entre le balai de connexion 7 et le collecteur 5. Les éléments du moteur électrique 1 décrits précédemment et l'inducteur disposé autour de l'induit 3 sont logés dans une carcasse 15 de protection du moteur électrique 1. La carcasse 15 est fermée par un capot 17 à l'une de ses extrémités, ledit capot 17 servant de palier du moteur électrique 1.

Par ailleurs, les moteurs électriques à balais de connexion 7 et collecteur 5 provoquent des parasites électromagnétiques dans de larges bandes de fréquences. Ces parasites peuvent perturber le matériel électronique situé à proximité. En effet, ils peuvent par exemple provoquer la mise en fonctionnement intempestive d'un actionneur commandé par un système électronique.

Pour résoudre ces problèmes, il est connu d'utiliser un filtre afin de réduire ou supprimer les effets nuisibles des parasites. Les filtres comprennent notamment des inductances qui sont connectées aux balais pour limiter les hautes fréquences parasites.

Il est connu dans ce domaine les documents DE19623258, DE9316543, FR2520153, DE102007005572, DE102009027366 et EP0612137.

De plus, du fait de l'espace restreint dans le moteur électrique 1, des inductances 19 sont généralement placées dans une tour de connexion électrique 21 fixée sur la plaquette porte-balai 9 et s'étendant perpendiculairement à la plaquette 9 comme représenté sur la figure 2 qui représente un ensemble porte-balai selon l'état de la technique. La tour de connexion électrique 21 comprend également des terminaux de connexion 23 pour permettre l'alimentation des balais de connexion 7. Cependant, avec une telle disposition, il y a des risques d'interaction électromagnétique entre l'inducteur du moteur électrique 1 et les inductances 19, ce qui peut nuire à l'efficacité du filtre établi par les inductances 19 et à la compatibilité électromagnétique du moteur électrique 1.

Il convient donc de trouver une solution permettant de fixer les inductances 19 près des balais de connexion 7 tout en limitant les interactions électromagnétiques entre les inductances 19 et l'inducteur du moteur électrique 1. De plus, afin de faciliter le montage du moteur électrique 1, il convient de trouver un moyen permettant une fixation aisée des inductances 19 pour faciliter leur montage et leur connexion aux balais 7.

A cet effet, la présente invention concerne un ensemble porte-balai pour moteur électrique d'un équipement de véhicule automobile comprenant :
- une plaquette destinée à maintenir au moins un balai de connexion contre un collecteur disposé sur un rotor du moteur électrique, la plaquette s'étendant dans un plan perpendiculaire audit rotor,
- au moins une inductance destinée à être connectée audit balai de connexion, caractérisé en ce que l'ensemble porte-balai comprend au moins un élément de maintien de la, au moins une, inductance configuré pour maintenir l'inductance dans un plan parallèle à la plaquette.

L'utilisation d'un élément de maintien d'inductance permet de faciliter le montage du moteur électrique notamment pour réaliser les connexions électriques avec l'inductance. De plus, le maintien de l'inductance dans un plan parallèle à la plaquette, c'est-à-dire dans un plan perpendiculaire à l'axe du rotor et donc perpendiculaire aux lignes de champ du champ magnétique créé par les composants électromagnétiques du moteur, notamment l'inducteur, ce qui permet de réduire les interactions électromagnétiques entre l'inductance et les autres éléments du moteur électrique. Cela permet de réduire les parasites électromagnétiques créés par le moteur électrique et pouvant perturber les autres équipements électroniques situés à proximité du moteur électrique.

Selon l'invention, l'élément de maintien est fixé de façon amovible sur la plaquette.

L'utilisation d'un élément de maintien amovible permet une grande modularité en pouvant adapter différents types d'éléments de maintien, correspondant par exemple à différents types d'inductances, sur un même modèle de plaquette.

Selon un aspect supplémentaire de la présente invention, l'élément de maintien comprend des branches élastiques de maintien de l'inductance.

Selon un aspect additionnel de la présente invention, les branches élastiques forment un clip de maintien de l'inductance.

L'utilisation d'un clip de maintien permet un montage aisé de l'inductance ainsi qu'un maintien fiable de l'inductance.

Selon un autre aspect de la présente invention, l'élément de maintien comprend une embase de fixation par encliquetage à la plaquette.

Selon un aspect supplémentaire de la présente invention, l'élément de maintien comprend une embase de fixation de type quart de tour à la plaquette.

La fixation quart de tour permet un montage simple et rapide

Selon un aspect additionnel de la présente invention, l'embase de fixation a une forme générale en T destinée à être insérée dans une fente complémentaire de la plaquette et à être pivotée pour bloquer une translation de l'élément de maintien par rapport à la plaquette, l'élément de maintien comprenant également un bras déformable élastiquement muni d'un doigt d'arrêt destiné à s'insérer dans une forme complémentaire de la plaquette pour bloquer la rotation de l'élément de maintien par rapport à la plaquette.

Selon un autre aspect de la présente invention, l'élément de maintien comprend un crochet situé sur la partie de l'embase de fixation destinée à être insérée dans la fente complémentaire de la plaquette, ledit crochet servant de guide-fil pour un câble d'alimentation de l'inductance.

Selon un aspect supplémentaire de la présente invention, la plaquette a une forme générale de disque ajouré au centre pour permettre le passage du collecteur.

Selon un aspect additionnel de la présente invention, la plaquette est réalisée en bakélite.

Selon un autre aspect de la présente invention, l'élément de maintien est réalisé en polyamide, par exemple en résine polyamide de type PA 6.6 chargée en fibre de verre à 35%.

Selon un autre aspect de la présente invention, l'ensemble comprend également au moins une tour de connexion électrique destinée à être fixée sur la plaquette et s'étendant dans une direction perpendiculaire au plan de la plaquette, ladite tour de connexion électrique comprenant au moins un terminal de connexion destiné à être connecté à l'inductance.

La présente invention concerne également un moteur électrique d'un équipement de véhicule automobile, notamment un système d'essuyage, comprenant un collecteur et un ensemble porte-balai tel que décrit précédemment.

D'autres caractéristiques et avantages de l'invention ressortiront de la description suivante, donnée à titre d'exemple et sans caractère limitatif, en regard des dessins annexés sur lesquels :
- la figure 1 représente une vue éclatée schématique d'un moteur électrique ;
- la figure 2 représente un schéma d'une plaquette porte-balai et d'une tour de connexion électrique selon l'état de la technique ;
- la figure 3 représente un schéma d'une plaquette porte-balai et d'une tour de connexion électrique selon un mode de réalisation de la présente invention;
- les figures 4 et 5 représentent un schéma d'un élément de maintien selon un mode de réalisation de la présente invention ;
- les figures 6 et 7 représentent un schéma d'un ensemble comprenant une plaquette et des éléments de maintien ;
- la figure 8 représente un schéma d'une plaquette porte-balai et d'une tour de connexion électrique selon un mode de réalisation de la présente invention.

Sur toutes les figures, les éléments ayant des fonction identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

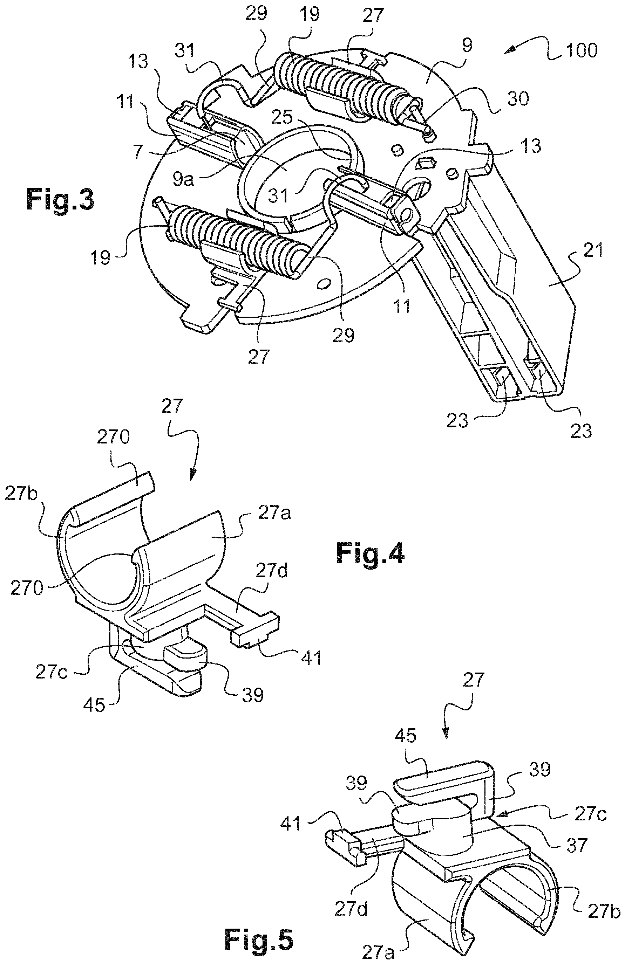

La figure 3 représente un ensemble porte-balai 100 pour moteur électrique 1 d'un équipement de véhicule automobile, notamment un dispositif essuie-glace comprenant un moto-réducteur. L'ensemble 100 comprend une plaquette 9 destinée à maintenir au moins un balai de connexion 7 autour et contre un collecteur 5 du moteur électrique 1. Pour cela, la plaquette 9 a par exemple une forme générale de disque ajouré au centre pour permettre le passage du collecteur 5. La partie centrale ajourée 9a peut avoir une forme circulaire apte à recevoir un collecteur 5 cylindrique. Le collecteur 5 est associé à un rotor 6 du moteur électrique 1. La plaquette 9 peut être réalisée en bakélite ce qui permet de résister aux hautes températures, par exemple des températures de l'ordre de 150°C. En effet, du fait des composants électriques du moteur 3, la température au niveau de la plaquette 9 peut atteindre une température proche de 150°C.

L'ensemble 100 comprend également au moins un porte-balai 11, deux dans le cas de la figure 3, destinés à être fixés à la plaquette 9 et à recevoir un balai de connexion 7. Les porte-balais 11 peuvent être fixés à la plaquette 9 par le biais d'un anneau de maintien 25 situé au niveau de la partie centrale ajourée 9a de la plaquette 9 ou par encliquetage sur la plaquette 9 ou par tout autre moyen de fixation connu de l'homme du métier. Alternativement, les porte-balais 11 peuvent être réalisés de matière avec la plaquette 9.

Les balais de connexion 7 viennent se positionner dans un logement du porte-balai 11 dans lequel ils sont mobiles en translation, le mouvement de translation étant dirigé vers le centre de la plaquette 9. De plus, les porte-balais 11 comprennent un élément élastique 13, comme par exemple un ressort à lame, un ressort spirale ou un ressort hélicoïdal, configuré pour contraindre le balai de connexion 7 vers le centre de la plaquette 9. Ainsi, à l'état monté, la plaquette 9 vient entourer le collecteur 5 et les balais de connexion 7 sont maintenus en contact avec des pistes du collecteur 5 par l'action des porte-balais 11 et de l'élément élastique 13.

L'ensemble 100 comprend également au moins une inductance 19, deux dans le cas présent, destinées à être connectées à un balai de connexion 7. Chaque inductance 19 est maintenue sur la plaquette 9 par au moins un élément de maintien 27 associé. Les éléments de maintien 27 sont fixés de façon amovible sur la plaquette 9 et sont configurés pour maintenir l'inductance 19 associée dans un plan parallèle à la plaquette 9. Les inductances 19 sont connectées électriquement aux balais de connexion 7, par exemple via des câbles de liaison 29 reliant une première extrémité des inductances 19 à un fil électrique d'alimentation 31 des balais aussi appelé « shunt » en anglais. L'ensemble 100 peut également comprendre une tour de connexion électrique 21 qui a par exemple une forme générale parallélépipédique dont la longueur s'étend dans une direction perpendiculaire au plan de la plaquette 9. La tour de connexion électrique 21 comprend des moyens de fixation à la plaquette 9, par exemple des moyens d'encliquetage, à une première extrémité et au moins un terminal de connexion 23, deux dans le cas présent, à une deuxième extrémité opposée à la première. La tour de connexion électrique 21 est par exemple réalisée sous forme d'une coque qui peut être ouverte sur certains cotés et configurée pour recevoir des câbles d'alimentation 30 reliant les terminaux de connexion 23 aux inductances 19. La tour de connexion électrique 21 peut également recevoir des composants électriques destinés à être connectés entre les terminaux de connexion 23 et les inductances 19 comme par exemple des condensateurs configurés pour être couplés aux inductances 19 pour former des filtres de type LC. La taille et la forme de la tour de connexion électrique 21 peut varier en fonction du modèle de moteur électrique 1 et en fonction des composants destinés à être positionnés dans la tour de connexion 21.

Les éléments de maintien 27 vont maintenant être décrits en détails à partir des figures 4 à 7.

Les figures 4 et 5 représentent deux vues différentes d'un élément de maintien 27 destiné à être fixé à la plaquette 9 et à maintenir une inductance 19. L'élément de maintien 27 comprend des branches élastiques 27a et 27b de maintien de l'inductance. Les branches élastiques 27a et 27b sont ici face à face et incurvés pour former un clip de maintien de l'inductance 19 en forme de berceau mais d'autres configurations ayant un nombre, une disposition et/ou une forme de branches différente sont également possibles dans le cadre de la présente invention. Les branches élastiques 27a et 27b peuvent également comprendre un crochet de retenue 270 à leur extrémité pour permettre un meilleur maintien de l'inductance 19.

L'élément de maintien 27 comprend également une embase de fixation 27c mieux visible sur la figure 5 pour permettre la fixation de l'élément de maintien 27 sur la plaquette 9.

Selon un mode de réalisation représenté sur les figures 4 à 7, la fixation de l'élément de maintien 27 sur la plaquette 9 est réalisée par une fixation quart de tour.

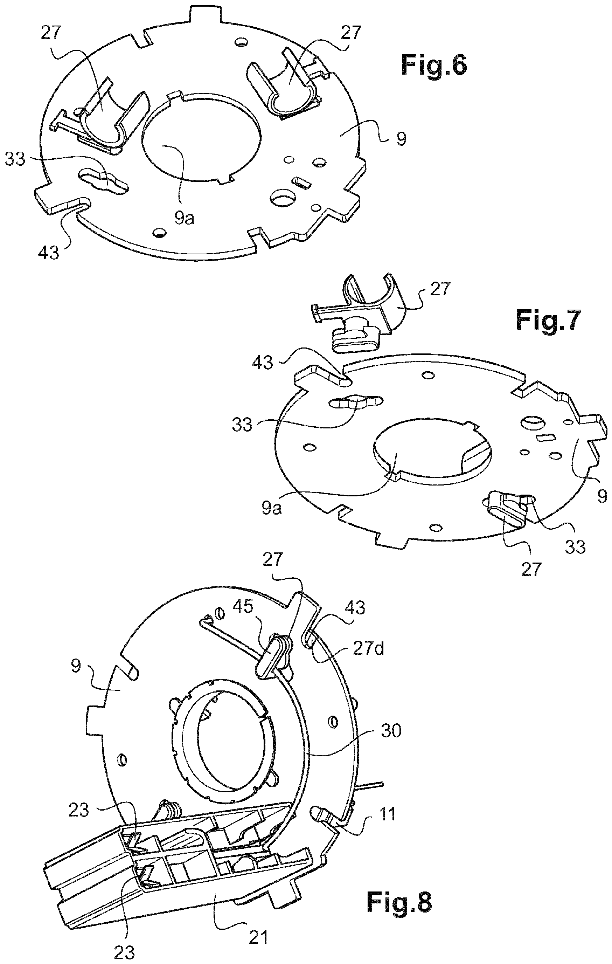

Pour cela, l'embase de fixation 27c a une forme générale en T et est destinée à être insérée dans une fente complémentaire 33 de la plaquette 9 visible sur les figures 6 et 7. La forme en T est réalisée par une colonne centrale cylindrique 37 surmontée, à son extrémité, de deux oreilles latérales 39 disposées de part et d'autre de la colonne centrale cylindrique 37. La fente complémentaire 33 a une forme allongée qui permet le passage du sommet de l'embase 27c lorsque les oreilles latérales 39 sont alignées avec l'axe longitudinal de la fente complémentaire 33. Lorsque le sommet de l'embase de fixation 27c est introduit dans la fente complémentaire 33, l'élément de maintien 27 peut être pivoté, par exemple d'un quart de tour, pour bloquer une translation de l'élément de maintien 27 par rapport à la plaquette 9. D'autres angles, différent de 90° peuvent également être choisis pour la fixation de l'élément de maintien 27.

L'élément de maintien 27 comprenant également un bras 27d déformable élastiquement muni d'un doigt d'arrêt 41 destiné à venir s'insérer dans une forme complémentaire 43 de la plaquette 9 pour bloquer la rotation de l'élément de maintien 27 par rapport à la plaquette 9 lorsque l'angle de 90° est atteint. La forme complémentaire 43 est ici positionnée sur un bord de la plaquette 9 et le bras 27d est rectiligne mais d'autres formes de bras 27d et de forme complémentaire 43 ainsi que d'autres emplacements pour la forme complémentaire 43 peuvent aussi être choisis dans le cadre de la présente invention.

Ainsi, lors de l'assemblage du moteur électrique 1, il suffit d'introduire l'extrémité de l'embase 27c opposée aux branches élastiques 27a et 27b dans la fente complémentaire 33 de la plaquette et de tourner l'élément de maintien 27 d'un quart de tour pour fixer ledit élément de maintien 27 à la plaquette 9. L'inductance 19 peut alors être placée sur l'élément de maintien 27 entre les branches élastiques 27a et 27b.

Selon un mode de réalisation alternatif, l'élément de maintien 27 peut être fixé à la plaquette 9 par encliquetage.

Par ailleurs, l'élément de maintien 27 comprend un crochet 45 situé sur la partie de l'embase de fixation 27c destinée à être insérée dans la fente complémentaire 33 de la plaquette 9, c'est-à-dire sur la partie opposée aux branches élastiques 27a et 27b. Le crochet 45 est par exemple réalisé par une forme en U s'étendant depuis une première oreille 39 et revenant vers la deuxième oreille 39. Le crochet 45 sert de guide-fil pour le câble d'alimentation 30 de l'inductance 19, c'est-à-dire le câble d'alimentation 30 reliant le terminal de connexion 23 de la tour de connexion électrique 21 à l'inductance 19 maintenue sur l'élément de maintien 27 comme représenté sur la figure 8. Ainsi, une fois l'élément de maintien 27 fixé à la plaquette 9, le câble d'alimentation 30 de l'inductance 19 peut être glissé dans le crochet 45 pour être maintenu ce qui permet d'éviter que le câble d'alimentation 30 ne pende et ne soit détérioré lors du montage de la plaquette 9 sur l'induit 3 du moteur électrique 1.

L'élément de maintien 27 est par exemple réalisé en résine polyamide de type PA 6.6 chargée en fibre de verre à 35% ou tout autre matériau permettant d'obtenir une élasticité suffisante au niveau des branches 27a et 27b, du bras 27d et du crochet 45 et de résister à des températures allant jusqu'à 150°C.

Ainsi, l'utilisation d'un ensemble 100 comprenant une plaquette 9 et au moins un élément de maintien 27 permet une fixation aisée des inductances 19 sur la plaquette 9 et dans un plan parallèle à la plaquette 9 qui permet de limiter les interactions électromagnétiques entre les inductances 19 et les autres éléments du moteur électrique 1, notamment l'inducteur car les inductances 19 sont alors positionnées perpendiculairement aux lignes du champ magnétique de l'inducteur. Cela permet d'améliorer la compatibilité électromagnétique du moteur électrique 1. De plus, la fixation par un dispositif quart de tour permet un montage facile de l'élément de maintien 27 sur la plaquette et procure ainsi une modularité qui permet de fixer différents types d'inductances 19 à un même modèle de plaquette 9. L'utilisation de branches élastiques 27a et 27b formant un clip de maintien permet également un montage aisé et un bon maintien des inductances 19 sur la plaquette 9. Enfin, l'utilisation d'un crochet 45 permet le maintien du câble d'alimentation 30 du balai de connexion 7 et facilite encore le montage du moteur électrique 1 tout en évitant une détérioration du câble d'alimentation 30.

## Revendications

1. Ensemble porte-balai (100) pour moteur électrique (1) d'un équipement de véhicule automobile comprenant :
- une plaquette (9) destinée à maintenir au moins un balai de connexion (7) contre un collecteur (5) disposé sur un rotor (6) du moteur électrique (1), la plaquette (9) s'étendant dans un plan perpendiculaire audit rotor (6),
- au moins une inductance (19) destinée à être connectée audit balai de connexion (7),
**caractérisé en ce que** l'ensemble porte-balai (100) comprend au moins un élément de maintien (27) de la, au moins une, inductance (19) configuré pour maintenir l'inductance (19) dans un plan parallèle à la plaquette (9), l'élément de maintien (27) étant fixé de façon amovible sur la plaquette (9).

2. Ensemble (100) selon la revendication 1 dans lequel l'élément de maintien (27) comprend des branches élastiques (27a, 27b) de maintien de l'inductance (19).

3. Ensemble (100) selon la revendication 2 dans lequel les branches élastiques (27a, 27b) forment un clip de maintien de l'inductance (19).

4. Ensemble (100) selon l'une des revendications précédentes dans lequel l'élément de maintien (27) comprend une embase de fixation par encliquetage à la plaquette (9).

5. Ensemble (100) selon l'une des revendications 1 à 3 dans lequel l'élément de maintien (27) comprend une embase de fixation (27c) de type quart de tour à la plaquette (9).

6. Ensemble (100) selon la revendication 5 dans lequel l'embase de fixation (27c) a une forme générale en T destinée à être insérée dans une fente complémentaire (33) de la plaquette (9) et à être pivotée pour bloquer une translation de l'élément de maintien (27) par rapport à la plaquette (9), l'élément de maintien (27) comprenant également un bras (27d) déformable élastiquement muni d'un doigt d'arrêt (41) destiné à s'insérer dans une forme complémentaire (43) de la plaquette (9) pour bloquer la rotation de l'élément de maintien (27) par rapport à la plaquette (9).

7. Ensemble (100) selon la revendication 6 dans lequel l'élément de maintien (27) comprend un crochet (45) situé sur la partie de l'embase de fixation (27c) destinée à être insérée dans la fente complémentaire (33) de la plaquette (9), ledit crochet (45) servant de guide-fil pour un câble d'alimentation (30) de l'inductance (19).

8. Ensemble (100) selon l'une des revendications précédentes dans lequel la plaquette (9) a une forme générale de disque ajouré au centre pour permettre le passage du collecteur.

9. Ensemble (100) selon l'une des revendications précédentes dans lequel la plaquette (9) est réalisée en bakélite.

10. Ensemble (100) selon l'une des revendications précédentes dans lequel l'élément de maintien (27) est réalisé en polyamide.

11. Ensemble (100) selon l'une des revendications précédentes comprenant également au moins une tour de connexion électrique (21) destinée à être fixée sur la plaquette (9) et s'étendant dans une direction perpendiculaire au plan de la plaquette (9), ladite tour de connexion électrique (21) comprenant au moins un terminal de connexion (23) destiné à être connecté à l'inductance (19).

12. Moteur électrique (1) d'un équipement de véhicule automobile, notamment un système d'essuyage, comprenant un collecteur et un ensemble porte-balai (100) selon l'une des revendications précédentes.

## Patentansprüche

1. Bürstenträgeranordnung (100) für einen Elektromotor (1) einer Kraftfahrzeugeinrichtung, umfassend:
- eine Platte (9), die dazu bestimmt ist, mindestens eine Anschlussbürste (7) gegen einen Kollektor (5) zu halten, der an einem Rotor (6) des Elektromotors (1) angeordnet ist, wobei sich die Platte (9) in einer senkrecht zum Rotor (6) verlaufenden Ebene erstreckt,
- mindestens eine Induktivität (19), die dazu bestimmt ist, an die Anschlussbürste (7) angeschlossen zu werden,
**dadurch gekennzeichnet, dass** die Bürstenträgeranordnung (100) mindestens ein Halteelement (27) zum Halten der mindestens einen Induktivität (19) umfasst, das dazu ausgestaltet ist, die Induktivität (19) in einer parallel zur Platte (9) verlaufenden Ebene zu halten, wobei das Halteelement (27) lösbar an der Platte (9) befestigt ist.

2. Anordnung (100) nach Anspruch 1, bei der das Halteelement (27) elastische Schenkel (27a, 27b) zum Halten der Induktivität (19) umfasst.

3. Anordnung (100) nach Anspruch 2, bei der die elastischen Schenkel (27a, 27b) einen Clip zum Halten der Induktivität (19) bilden.

4. Anordnung (100) nach einem der vorhergehenden Ansprüche, bei der das Halteelement (27) einen Befestigungssockel zur Befestigung durch Einrasten an der Platte (9) umfasst.

5. Anordnung (100) nach einem der Ansprüche 1 bis 3, bei der das Halteelement (27) einen Befestigungssockel (27c) zur Vierteldrehungsbefestigung an der Platte (9) umfasst.

6. Anordnung (100) nach Anspruch 5, bei welcher der Befestigungssockel (27c) die Grundform eines T hat, die dazu bestimmt ist, in einen komplementär ausgebildeten Schlitz (33) der Platte (9) eingeführt zu werden und gedreht zu werden, um eine Translation des Halteelements (27) in Bezug auf die Platte (9) zu blockieren, wobei das Halteelement (27) auch einen elastisch verformbaren Arm (27d) umfasst, der mit einem Arretierstift (41) versehen ist, der dazu bestimmt ist, in eine komplementär ausgebildete Form (43) der Platte (9) eingeführt zu werden, um das Verdrehen des Halteelements (27) in Bezug auf die Platte (9) zu blockieren.

7. Anordnung (100) nach Anspruch 6, bei der das Halteelement (27) einen Haken (45) umfasst, der an dem Teil des Befestigungssockels (27c) gelegen ist, der dazu bestimmt ist, in den komplementär ausgebildeten Schlitz (33) der Platte (9) eingeführt zu werden, wobei der Haken (45) als Drahtführung für ein Versorgungskabel (30) der Induktivität (19) dient.

8. Anordnung (100) nach einem der vorhergehenden Ansprüche, bei der die Platte (9) die Grundform einer Scheibe hat, die in der Mitte durchbrochen ist, um das Durchführen des Kollektors zu ermöglichen.

9. Anordnung (100) nach einem der vorhergehenden Ansprüche, bei der die Platte (9) aus Bakelit ausgeführt ist.

10. Anordnung (100) nach einem der vorhergehenden Ansprüche, bei der das Halteelement (27) aus Polyamid ausgeführt ist.

11. Anordnung (100) nach einem der vorhergehenden Ansprüche, umfassend auch mindestens einen Stromanschlussturm (21), der dazu bestimmt ist, an der Platte (9) befestigt zu werden, und sich in eine senkrecht zur Ebene der Platte (9) verlaufende Richtung erstreckt, wobei der Stromanschlussturm (21) mindestens eine Anschlussklemme (23) umfasst, die dazu bestimmt ist, an die Induktivität (19) angeschlossen zu werden.

12. Elektromotor (1) einer Kraftfahrzeugeinrichtung, insbesondere eines Wischsystems, der einen Kollektor und einen Bürstenträger (100) nach einem der vorhergehenden Ansprüche umfasst.

## Claims

1. Brush-holder assembly (100) for an electric motor (1) of a piece of motor vehicle equipment comprising:
- a plate (9) intended to hold at least one connection brush (7) against a commutator (5) disposed on a rotor (6) of the electric motor (1), the plate (9) extending in a plane at right angles to said rotor (6),
- at least one inductor (19) intended to be connected to said connection brush (7),
**characterized in that** the brush-holder assembly (100) comprises at least one holding element (27) for the at least one inductor (19) configured to hold the inductor (19) in a plane parallel to the plate (9), the holding element (27) being removably fixed to the plate (9).

2. Assembly (100) according to Claim 1, wherein the holding element (27) comprises elastic branches (27a, 27b) for holding the inductor (19).

3. Assembly (100) according to Claim 2, wherein the elastic branches (27a, 27b) form a holding clip for the inductor (19).

4. Assembly (100) according to one of the preceding claims, wherein the holding element (27) comprises a base for fixing by snap-fitting to the plate (9).

5. Assembly (100) according to one of Claims 1 to 3, wherein the holding element (27) comprises a base (27c) for quarter-turn type fixing to the plate (9).

6. Assembly (100) according to Claim 5, wherein the fixing base (27c) has a general T shape intended to be inserted into a complementary slit (33) of the plate (9) and to be pivoted to lock a translation of the holding element (27) relative to the plate (9), the holding element (27) also comprising an elastically deformable arm (27d) provided with a stop finger (41) intended to be inserted into a complementary form (43) of the plate (9) to block the rotation of the holding element (27) relative to the plate (9).

7. Assembly (100) according to Claim 6, wherein the holding element (27) comprises a hook (45) situated on the part of the fixing base (27c) intended to be inserted into the complementary slit (33) of the plate (9), said hook (45) serving as wire guide for a power supply cable (30) for the inductor (19).

8. Assembly (100) according to one of the preceding claims, wherein the plate (9) has an overall disc form that is holed at the centre to allow the passage of the commutator.

9. Assembly (100) according to one of the preceding claims, wherein the plate (9) is made of bakelite.

10. Assembly (100) according to one of the preceding claims, wherein the holding element (27) is made of polyamide.

11. Assembly (100) according to one of the preceding claims, also comprising at least one electrical connection tower (21) intended to be fixed to the plate (9) and extending in a direction at right angles to the plane of the plate (9), said electrical connection tower (21) comprising at least one connection terminal (23) intended to be connected to the inductor (19).

12. Electric motor (1) of a piece of a motor vehicle equipment, notably a wiper system, comprising a commutator and a brush-holder assembly (100) according to one of the preceding claims.
